Europäisches Patentamt

European Patent Office

Office européen des brevets

(19)

(11) EP 0 588 687 B1

(12)

# FASCICULE DE BREVET EUROPEEN

(45) Date de publication et mention
de la délivrance du brevet:
**04.03.1998 Bulletin 1998/10**

(51) Int Cl.⁶: **G01S 13/92**, G01S 13/64

(21) Numéro de dépôt: **93402175.9**

(22) Date de dépôt: **07.09.1993**

(54) **Système de calcul d'au moins un paramètre de contrôle de trafic de véhicules**

System zur Bestimmung von zumindest einem Verkehrsregelungsparameter für Fahrzeuge

System for determining at least one control parameter for vehicular traffic

(84) Etats contractants désignés:
**DE FR GB IT SE**

(30) Priorité: **15.09.1992 FR 9210965**

(43) Date de publication de la demande:
**23.03.1994 Bulletin 1994/12**

(73) Titulaire: **THOMSON-CSF**
**75008 Paris (FR)**

(72) Inventeurs:
• **Lion, Didier**
**F-92402 Courbevoie Cedex (FR)**
• **De Poulpicquet, Eric**
**F-92402 Courbevoie Cedex (FR)**

(74) Mandataire: **Benoit, Monique et al**
**THOMSON-CSF-S.C.P.I.,**
**13, Avenue du Président**
**Salvador Allende**
**94117 Arcueil Cédex (FR)**

(56) Documents cités:
EP-A- 0 080 397          DE-A- 3 810 357
GB-A- 1 185 056          GB-A- 1 315 533

• **INTERNATIONAL CONFERENCE: RADAR 87**
**Octobre 1987 , NEW YORK, US pages 292 - 296**
**SMIT ET AL. 'Static Radar Sensors for**
**Observation and Control of Inland Vessel Traffic'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention consiste en un système de calcul d'au moins un paramètre de contrôle de trafic de véhicules.

Le domaine plus particulièrement visé par l'invention concerne les véhicules automobiles (voitures, poids lourds...) circulant sur toutes sortes de voies (autoroutes, nationales, départementales...). Nous verrons cependant que le système objet de l'invention peut également contrôler le trafic fluvial ou maritime, ou encore des objets circulant sur une chaîne robotisée. Ainsi, le terme véhicule couvre tout aussi bien les voitures, camions, motocyclettes, bateaux, objets...

Dans le domaine particulier des véhicules automobiles, on cherche à faire une analyse du trafic en un point précis permettant de déduire un certain nombre de paramètres. Les paramètres auxquels on s'intéresse sont notamment :

- le nombre de véhicules passant sur chaque voie durant un intervalle de temps prédéfini ;
- la vitesse de ces véhicules ;
- la vitesse moyenne et harmonique d'un ensemble de véhicules ;
- le pourcentage de poids lourds ;
- le taux d'occupation sur chacune des voies...

A l'heure actuelle, l'analyse du trafic routier ou autoroutier est réalisée principalement par trois techniques :

Une première technique très largement utilisée consiste à placer sous la route des boucles à induction. La variation du champ induit dans de telles boucles permet de savoir si un véhicule est passé ou non.

L'avantage principal de cette technique réside dans le fait que les boucles à induction fonctionnent quelles que soient les conditions climatiques, de jour comme de nuit. Cependant, l'implantation de ces boucles à induction est lourde et coûteuse à mettre en oeuvre, et il est difficile, voire impossible de procéder à des entretiens. De plus, on ne peut guère faire mieux que du comptage de voitures.

Une seconde technique encore au stade du prototype, consiste à utiliser des caméras vidéo associées à un traitement des images captées. L'implantation sur mâts de ces caméras est ici très facile, mais les performances sont peu concluantes : les caméras vidéo ne présentent pas l'avantage de fonctionner quelles que soient les conditions climatiques, et sont, de surcroît, très dépendantes des conditions de luminosité. En outre, les algorithmes utilisés dans le traitement des images sont complexes et nécessitent une puissance de calcul importante.

Enfin, une troisième technique connue consiste à positionner un radar, par exemple sur l'infrastructure d'un pont, et de détecter les véhicules ainsi que leur vitesse par l'effet Doppler.

Le brevet américain US-A-4 985 705 décrit une manière habituelle de mettre en oeuvre cette troisième technique d'analyse de trafic routier au moyen d'un radar à onde continue. Celle-ci consiste à choisir un radar millimétrique à onde continue pourvu d'une antenne ayant un pinceau fin (3° d'ouverture à l'horizontal et 13° à la verticale), à le disposer au dessus d'une voie de circulation, incliné vers le bas, pour que le faisceau de son antenne n'intercepte qu'une portion de cette voie de circulation et à extraire les différents paramètres concernant le trafic des détections des présences de véhicule sur cette voie et des vitesses de ces véhicules déduites de l'effet Doppler. L'inconvénient de cette mise en oeuvre, est qu'elle ne permet de contrôler qu'une seule voie de circulation. Sur une chaussée présentant plusieurs voies de circulations, il faut disposer d'autant de radars que de voies de circulation ce qui peut s'avérer coûteux aussi bien en appareillage qu'en installation.

Il est également connu, par le brevet britannique GB-A-1 315 533, de disposer un radar à faisceau relativement large (25° d'ouverture à l'horizontal) sur le côté d'une chaussée à plusieurs voies, orienté à 45° de la chaussée, ce radar étant pourvu de moyens d'inhibition le rendant insensible aux véhicules en dehors d'une plage de distance correspondant à une voie sélectionnée. Le radar muni de ses moyens d'inhibition en distance engendre des couples d'impulsions (twin pulses) dont la première dite impulsion de signal (signal pulse) provoque un écho en retour et dont la deuxième dite impulsion de rythme (timing pulse) sert à la démodulation de l'écho en retour. Cette technique d'analyse de trafic routier à l'aide d'un radar fonctionnant par couples d'impulsions permet d'analyser le trafic routier de l'une des voies au choix d'une chaussée à plusieurs voies de circulation mais elle ne permet pas l'analyse simultanée des trafics de plusieurs voies de circulation d'une même chaussée à l'aide d'un unique radar.

La présente invention a pour but de pallier les inconvénients précédents et de répondre à une demande récente comportant de plus en plus d'exigences sur le contrôle d'une zone localisée pouvant présenter plusieurs voies de circulation à double sens, par exemple une autoroute.

Plus précisément, la présente invention a pour objet un système de calcul d'au moins un paramètre de contrôle de trafic de véhicules pouvant circuler sur au moins deux voies de circulation, tel que décrit dans la revendication 1.

Il est également remarquable en ce que le module de traitement du signal de réception du radar est pourvu d'un filtre de lissage intercalé entre les moyens de calcul de transformée de Fourier et les moyens de détection.

L'invention, ainsi que ses avantages, seront mieux compris au vu de la description suivante, faite en référence aux figures annexées :

- La figure 1 est un exemple de réalisation possible et non limitatif du système selon l'invention ;
- Les figures 2a et 2b sont respectivement des vues de dessus et de côté de l'allure du diagramme de rayonnement du système selon l'invention ;
- La figure 3 donne un diagramme préférentiel en site du système, entre deux angles $\theta_0$ et $\theta_{max}$ définis grâce à la figure 4 qui est une nouvelle fois une vue de côté du diagramme ;
- Les figures 5a et 5b montrent l'allure des signaux issus de la transformée de Fourier respectivement avant le filtre de lissage prévu par l'invention, et après ce même filtre ;
- La figure 6 montre la correction à apporter selon l'invention sur la longueur mesurée d'un véhicule pour obtenir sa véritable longueur $L_v$.

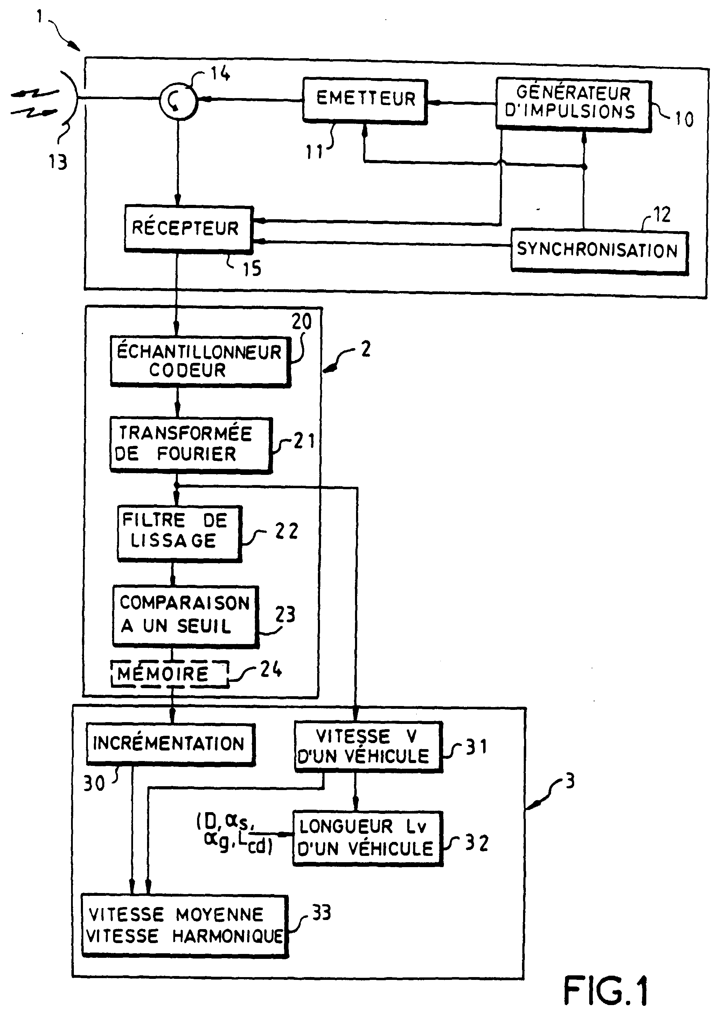

La figure 1 est un exemple de réalisation d'un système de contrôle selon l'invention :

Une première caractéristique essentielle du système selon l'invention est l'utilisation d'un radar à impulsions 1. Un tel radar génère en effet l'information de distance des véhicules détectés. Cette information peut être mise à profit pour l'observation de plusieurs voies de circulation grâce à un unique radar à impulsions, positionné d'une façon particulière comme nous allons le voir par la suite.

Nous décrivons ici succinctement la composition d'un tel radar bien connu de l'homme de l'art, et qui ne fait pas partie, en tant que telle, de l'invention.

Comme le montre la figure 1, le radar à impulsions 1 peut comporter classiquement un générateur d'impulsions 10 de fréquence porteuse $f_0$, transmettant les impulsions générées à un émetteur 11, ce dernier délivrant à une antenne 13 des impulsions de fréquence porteuse $f_0$ à la fréquence de récurrence $F_R$. Pour l'utilisation d'un système selon l'invention dans le contrôle du trafic de véhicules automobiles, le radar fonctionne préférentiellement en ondes millimétriques, la fréquence $f_o$ pouvant appartenir à l'intervalle [30 GHz ; 100 GHz]. Avantageusement, on choisit $f_o$ proche soit de 35 GHz, soit de 94 GHz, valeurs pour lesquelles l'absorption atmosphérique est la plus faible. Dans l'exemple de la figure 1, la même antenne 13 reçoit des signaux échos qu'elle transmet, via un circulateur 14, à un récepteur classique 15.

Une synchronisation 16 permet à l'ensemble émission-réception de fonctionner correctement, c'est-à-dire de recevoir des signaux échos seulement lorsque le radar n'émet pas d'impulsions.

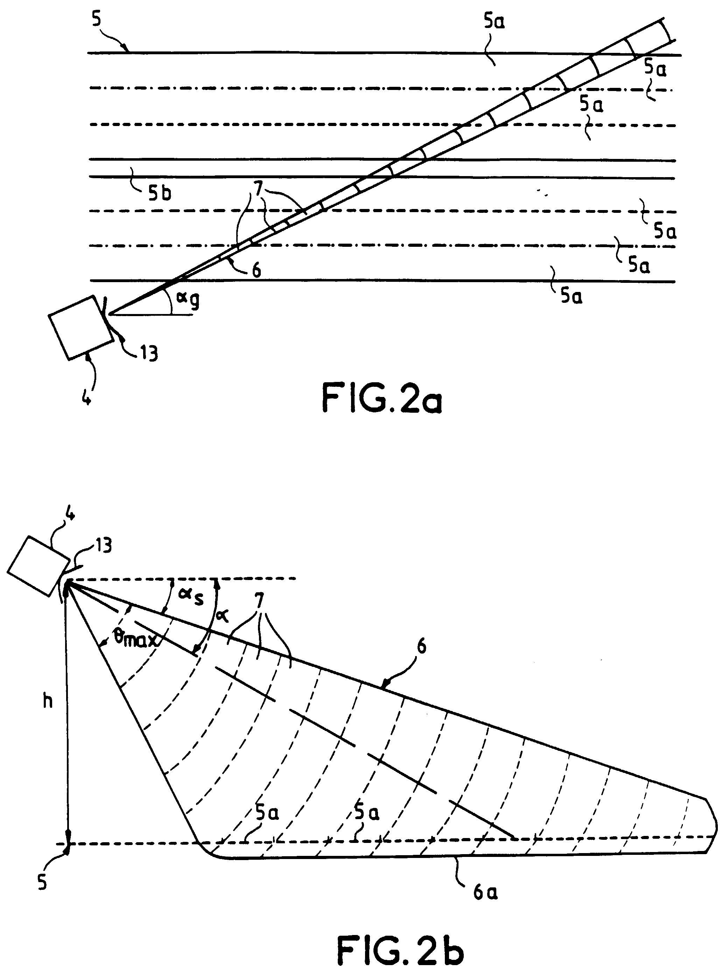

Conformément à l'invention, l'allure du diagramme de rayonnement de l'antenne 13 et sa position relative par rapport aux voies de circulation que l'on désire contrôler sont celles représentées sur les figures 2a et 2b qui sont les vues respectivement de dessus et de côté de la couverture radar dans l'application particulière mais non limitative du contrôle de trafic sur une autoroute 5 comportant par exemple six voies de circulation 5a et un terre-plein central 5b.

Sur ces figures, le système 4 selon l'invention est positionné sur un côté non commun aux voies 5a de circulation. Comme le montre la figure 2b, le système 4, est positionné en hauteur, par exemple sur un mât, de façon à ce que l'antenne 13 du radar puisse surplomber les voies 5a d'une hauteur h donnée. On choisit de préférence cette hauteur h supérieure à la hauteur maximale possible d'un véhicule autoroutier, de façon à ce qu'il n'y ait pas de masquage possible entre deux véhicules qui devraient être détectés en même temps par le radar, dans le cas où celui des deux véhicules le plus proche du radar possède une hauteur supérieure à l'autre véhicule.

Le diagramme de rayonnement 6 doit être étroit en gisement (figure 2a) et suffisamment large en site pour couvrir toutes les voies (figure 2b).

Il est en outre incliné d'un angle de site $\alpha_s$ et d'un angle de gisement $\alpha_g$, les valeurs de la largeur d'impulsion $\tau$, de $\alpha_s$ et de $\alpha_g$ étant ajustées de telle façon qu'au moins une case-distance 7 du radar soit incluse dans une voie 5a.

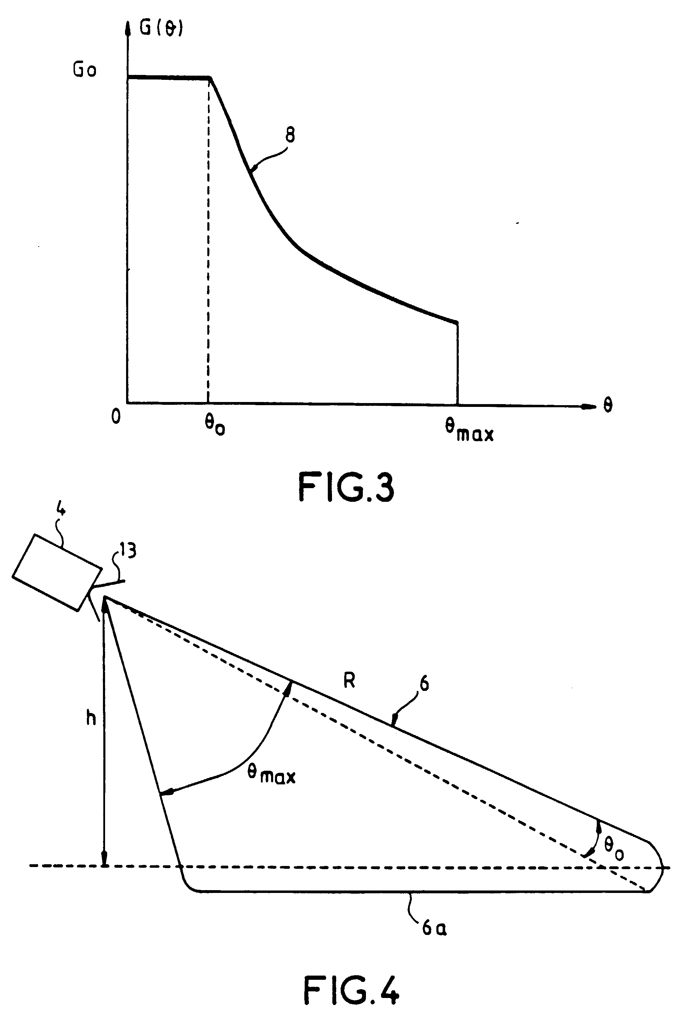

On peut avantageusement donner au diagramme de rayonnement en site une allure telle que représentée sur les figures 2b et 4, pour laquelle le diagramme 6 possède une zone 6a de gain dépendant de la distance et sensiblement parallèle à la route 5 de façon à ce qu'un même véhicule détecté à différentes distances soit reçu avec quasiment la même amplitude par le radar. On peut montrer que la loi $G(\theta)$ de gain en fonction de l'angle en site représentée par la courbe 8 de la figure 3 possède la propriété précédente. Pour un angle en site $\theta$ inférieur à un angle prédéterminé, le diagramme est identique à celui d'une antenne classique, c'est-à-dire qu'il possède un gain sensiblement constant $G_o$.

Pour un angle en site $\theta$ compris dans l'intervalle [ $\theta_0$, $\theta_{max}$], $\theta_{max}$ étant l'angle en site permettant la couverture totale des voies, le gain varie en cosécante carrée de $\theta$ selon la relation :

$$G(\theta) = G_0 \, \frac{CSC^2\theta}{CSC^2\theta_0}$$

En revenant à la figure 1, les signaux échos issus du récepteur 15 du radar 1 sont ensuite transmis à un module de traitement de signal 2 permettant la détection de véhicules par voie de circulation.

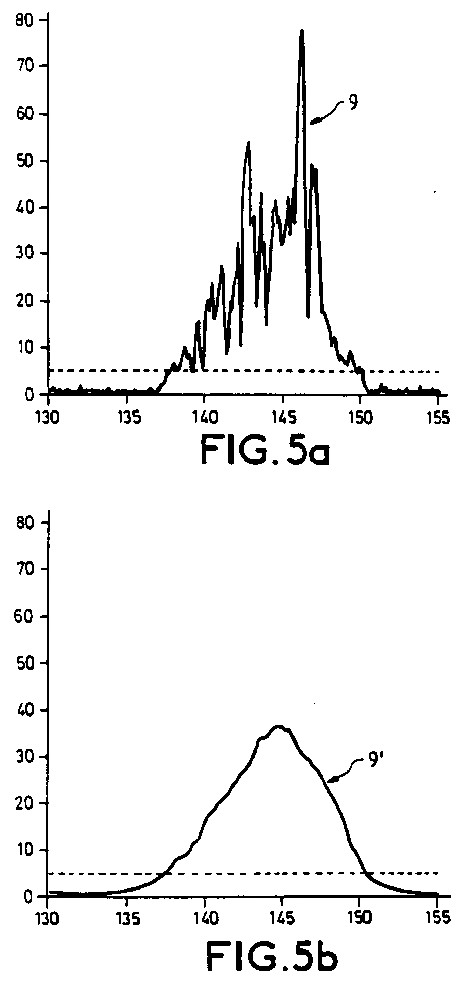

Ce module de traitement de signal 2 comporte tout d'abord un échantillonneur-codeur 20 délivrant, pour chaque case-distance 7 correspondant à une voie 5a, un nombre entier N d'échantillons temporels de signaux échos reçus, par exemple N = 128. Les échantillons temporels sont alors délivrés à des moyens de calcul 21 de la transformée de Fourier de ces échantillons, et les échantillons de fréquence issus des moyens de calcul 21 sont, conformément à l'invention, filtrés en amplitude par un filtre de lissage 22. Les figures 5a et 5b, représentant un exemple de l'amplitude du signal fréquentiel selon le temps respectivement avant le filtrage 22 et après ce filtrage, montrent la nécessité de ce filtrage. La courbe 9 sur la figure 5a est un exemple de ce que l'on obtient avec le système de l'invention lorsqu'un seul véhicule coupe le diagramme, à la sortie des moyens de calcul 21 de la transformée de Fourier.

Cette courbe 9 présente des variations rapides et importantes d'amplitude de sorte qu'un simple seuillage par rapport à une valeur de seuil s donnée conduirait à détecter plusieurs véhicules au lieu d'un. La fluctuation d'amplitude illustrée par la courbe 9 est due à la fluctuation naturelle de la surface équivalente radar du véhicule en ondes millimétriques au mouvement du véhicule et au changement d'angle de vue de ce véhicule pendant son temps de passage dans le faisceau. Pour remédier à ces fluctuations, et éviter par là-même des fausses alarmes, le système selon l'invention comporte donc un filtre de lissage 22 de l'amplitude du signal fréquentiel après transformée de Fourier.

Ce filtre peut être par exemple un filtre moyen dont l'application à un échantillon de fréquence donné permet de remplacer l'amplitude de cet échantillon par la moyenne de cette amplitude avec les amplitudes d'un nombre pair d'échantillons pris de part et d'autre dudit échantillon donné.

Le résultat du filtrage est illustré par la courbe 9' de la figure 5b. Il est possible à présent de faire une comparaison de l'amplitude des échantillons de fréquence avec un seuil s donné, grâce à des moyens de comparaison 23 illustrés sur la figure 1. Chaque comparaison positive est une détection d'un véhicule sur une voie. Le seuil s est soit fixé à l'avance, soit adaptatif.

Suite à la détection de véhicules sur chaque voie à partir d'un seul radar 1, le système selon l'invention prévoit de calculer un ou plusieurs paramètres de trafic. Il est doté pour cela d'un module d'extraction 3 de paramètres.

Un premier exemple de paramètre à extraire est le nombre de véhicules total par voie ou global détectés pendant une durée de mesure $T_{TOT}$. Ce nombre peut être extrait grâce à des moyens d'incrémentation 30, reliés par exemple aux moyens de comparaison 23, et augmentant d'une unité à chaque fois qu'un véhicule est détecté.

Il est également possible de calculer la vitesse V de chaque véhicule détecté. Pour ce faire, le module d'extraction 3 comporte des premiers moyens 31 de calcul de cette vitesse qui recherchent l'ordre f de l'échantillon de fréquence non nulle correspondant à l'amplitude maximale des échantillons issus du filtre 22, et qui calculent la vitesse V par application des relations suivantes :

$$
\begin{cases}
V(Km/h) = (f - N) \dfrac{F_R \times c \times \alpha_v}{2 f_0 \, N \cos \alpha_g \cos \alpha_s} & \text{si } f > \dfrac{N}{2} \\[3em]
V(Km/h) = f \dfrac{F_R \times c \times \alpha_v}{2 f_0 \, N \cos \alpha_g \cos \alpha_s} & \text{si } f \leq \dfrac{N}{2}
\end{cases}
$$

avec

$F_R$,          fréquence de récurrence du radar

c,          la vitesse de la lumière

         et

$\alpha_v$,          le facteur de conversion de m/s en km/h égal à 3,6.

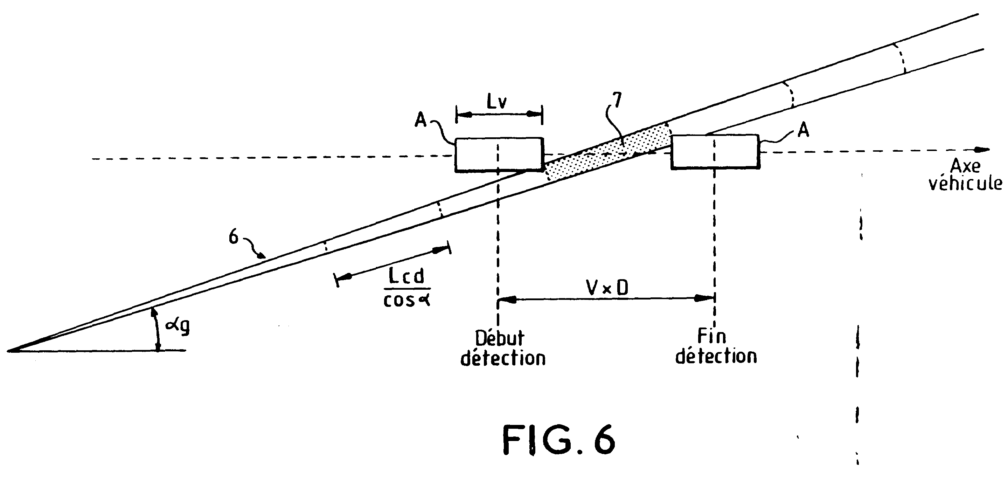

Doté de seconds moyens de calcul 32, le système selon l'invention peut également extraire la longueur $L_v$ d'un véhicule détecté. La figure 6 montre qu'il est nécessaire de faire une correction sur la longueur mesurée par le radar 1. En effet, le diagramme 6 du radar 1 détecte l'avant du véhicule A lorsque ce dernier intercepte le début de la case-distance 7, et la détection est réalisée jusqu'à ce que le véhicule sorte totalement de cette case-distance. Si $L_{cd}$ est la longueur de la case-distance 7, il faut tenir compte de l'erreur qu'elle provoque. Ainsi les seconds moyens 32 de calcul de la longueur $L_v$ d'un véhicule détecté calculent cette longueur à partir de la vitesse V calculée par les premiers moyens 31 en appliquant la relation :

$$L_V = V \times D - \frac{L_{cd} \cos \alpha_g}{\cos \alpha}$$

où D est la durée de présence du véhicule dans le diagramme de rayonnement 6, et $\alpha$ l'angle du radar-véhicule-sol illustré sur la figure 2b.

A partir du nombre de véhicules détectés, de leur vitesse et de leur longueur, le système peut faire un bon nombre de statistiques intéressantes :

Il peut par exemple, en fixant une longueur de véhicule seuil, calculer la densité de poids lourds présents dans la zone pendant une durée de mesure. Il peut également extraire, par des troisièmes moyens 33, la vitesse moyenne $V_{moy}$ et la vitesse harmonique $V_{harm}$ globales du trafic pendant une durée totale de mesure $T_{TOT}$. Les troisièmes moyens 33 calculent pour cela les relations :

$$\begin{cases} V_{moy} = \dfrac{1}{n_v} \sum_{i=1}^{n_v} V_i \\[2em] \dfrac{1}{V_{harm}} = \dfrac{1}{n_v} \sum_{i=1}^{n_v} \dfrac{1}{V_i} \end{cases}$$

où $n_v$ est le nombre de véhicules détectés sur la durée totale $T_{TOT}$, fourni par exemple par les moyens d'incrémentation 30,

et $V_i$ est la vitesse d'un véhicule détecté, fournie par les premiers moyens 31.

Le système de l'invention tel qu'il vient d'être décrit présente de nombreux avantages par rapport aux systèmes connus :

Il permet de contrôler, avec un radar unique, et sans balayage de faisceau, une pluralité de voies de circulation en même temps, et ceci, quel que soit le sens de circulation.

Les modules de traitement de signal 2 et d'extraction de paramètres 3 sont avantageusement réalisés sous forme de programmes informatiques. Les calculs peuvent être faits en temps réel, ou en temps différé si l'on dote le système de moyens de mémorisation 24.

La mise en place, par exemple sur mât, le réglage et l'entretien du système sont aisés, et l'encombrement modéré.

En outre, les performances du système de l'invention sont indépendantes des conditions climatiques. On peut envisager également d'implanter plusieurs systèmes sur différents points d'une route ou autoroute, et de corréler les résultats issus de chaque système grâce à une station de recueil des informations, de manière à avoir un suivi de l'évolution du trafic.

Enfin, le système peut être positionné en des points névralgiques d'un réseau autoroutier (bretelle d'entrée ou de sortie, abord d'un péage, entrée ou sortie d'une aire de repos...).

## Revendications

1. Système de calcul d'au moins un paramètre de contrôle de trafic de véhicules pouvant circuler sur au moins deux voies de circulation comportant un radar (1), un module de traitement du signal de réception du radar (2) pourvu d'un échantillonneur-codeur (20), de moyens de calcul de transformée de Fourier (21) et de moyens de détection (23), et un module d'extraction (3) dudit paramètre opérant à partir des signaux de sortie des moyens de détection (23) et des moyens de calculs de transformée de Fourier (21), caractérisé en ce que ledit radar (1) est un radar à impulsions avec un émetteur (11) émettant des impulsions de fréquence porteuse $f_0$ donnée et de durée $\tau$, avec un récepteur (15) fonctionnant en dehors des périodes d'émission des impulsions et avec un diagramme de rayonnement étroit en gisement, suffisamment large en site pour couvrir lesdites voies et permettre un contrôle simultané desdites voies, et incliné d'un angle de site $\alpha_s$ et d'un angle de gisement $\alpha_g$, les valeurs de la durée d'impulsion $\tau$, de l'angle de site $\alpha_s$ et de l'angle de gisement $\alpha_g$, étant choisies telles qu'au moins une case distance du radar soit incluse dans une voie, et en ce que lesdits moyens de calcul de la transformée de Fourier opèrent sur un nombre entier N d'échantillons temporels issus de l'échantillonneur-codeur pour chaque case distance correspondant à chaque voie de circulation et que ledit module de traitement du signal de réception du radar (2) est pourvu d'un filtre de lissage (22) de l'amplitude des échantillons de fréquence issus des moyens de calcul intercalé entre les moyens de calcul de transformée de Fourier (21) et les moyens de détection (23) qui sont des moyens de comparaison de l'amplitude des échantillons issus de filtre de lissage par rapport à un seuil donné pour détecter le passage de véhicule sur chaque voie.

2. Système de calcul selon la revendication 1, caractérisé en ce que le diagramme de rayonnement (6) possède, en site, un gain $G(\theta)$ variant, en fonction de l'angle $\theta$ en site, en cosécante carrée selon la relation suivante :

$$G(\theta) = G_0 \, \frac{CSC^2\theta}{CSC^2\theta_0} \qquad \text{pour} \qquad \theta \in [\theta_0, \theta_{max}]$$

avec:

- $G_0$, le gain sensiblement constant du diagramme de rayonnement pour des angles $\theta$ en site inférieurs à $\theta_0$
- $\theta_0$ et $\theta_{max}$, deux valeurs d'angles en site prédéterminées.

3. Système de calcul selon l'une quelconque des revendications précédentes, caractérisé en ce que ledit paramètre est le nombre n de véhicules passant sur chaque voie, et en ce que le module d'extraction (3) comporte des moyens d'incrémentation (30) augmentant d'une unité à chaque fois qu'un véhicule est détecté.

4. Système de calcul selon l'une quelconque des revendications 1 à 3, caractérisé en ce que ledit paramètre est la vitesse V d'un véhicule détecté sur un domaine de vitesses $D_v$, et en ce que le module d'extraction (3) comporte des premiers moyens (31) de calcul de cette vitesse recherchant l'ordre f de l'échantillon de fréquence non nulle correspondant à l'amplitude maximale des échantillons issus du filtre (22) et calculant la vitesse V du véhicule par application des relations suivantes :

$$\begin{cases} V(Km/h) = (f - N) \, \dfrac{F_R \times c \times \alpha_v}{2 f_0 N \cos \alpha_g \cos \alpha_s} & \text{si } f > \dfrac{N}{2} \\[3em] V(Km/h) = f \, \dfrac{F_R \times c \times \alpha_v}{2 f_0 N \cos \alpha_g \cos \alpha_s} & \text{si } f \leq \dfrac{N}{2} \end{cases}$$

dans lesquelles

$F_R$, fréquence de récurrence du radar
c est la vitesse de la lumière
et
$\alpha_v$, le facteur de conversion de m/s en km/h, égal à 3,6.

5. Système de calcul selon la revendication 4, caractérisé en ce qu'il calcule, en outre, la longueur $L_v$ d'un véhicule détecté, et en ce que le module d'extraction (3) comporte des seconds moyens (32) calculant cette longueur par application de la relation suivante :

$$L_V = V \times D - \frac{L_{cd} \cos \alpha_g}{\cos \alpha}$$

dans laquelle D est la durée de présence du véhicule dans le diagramme de rayonnement, $\alpha$ est l'angle de site du véhicule,
et $L_{cd}$ est la longueur d'une case-distance.

**6.** Système de calcul selon l'une quelconque des revendications 4 ou 5, caractérisé en ce qu'il calcule, en outre, la vitesse moyenne $V_{moy}$ et la vitesse harmonique $V_{harm}$, de tous les véhicules détectés sur une durée totale $T_{TOT}$ de mesure, et en ce que le module d'extraction (3) comporte des troisièmes moyens (33) calculant ces vitesses par application des relations suivantes :

$$
\begin{cases}
V_{moy} = \dfrac{1}{n_v} \displaystyle\sum_{i=1}^{n_v} V_i \\[2em]
\dfrac{1}{V_{harm}} = \dfrac{1}{n_v} \displaystyle\sum_{i=1}^{n_v} \dfrac{1}{V_i}
\end{cases}
$$

avec

$n_v$, le nombre de véhicules détectés sur la durée totale
$V_i$, la vitesse d'un véhicule détecté.

**7.** Système de calcul selon l'une quelconque des revendications précédentes, caractérisé en ce que le filtre de lissage (22) est un filtre de type passe-bas remplaçant l'amplitude de chaque échantillon issu des moyens de calcul (21) de la transformée de Fourier par la moyenne de ladite amplitude avec celles d'un nombre pair d'échantillons pris de part et d'autre dudit échantillon.

**8.** Système de calcul selon l'une quelconque des revendications précédentes, caractérisé en ce que les modules de traitement (2) et d'extraction (3) fonctionnent en temps différé grâce à des moyens de mémorisation (24).

**9.** Système de calcul selon l'une quelconque des revendications précédentes, caractérisé en ce que la hauteur h est supérieure à la hauteur maximale que peut avoir un véhicule.

**Patentansprüche**

**1.** Rechensystem für die Berechnung von wenigstens einem Parameter für die Kontrolle des Verkehrs von Fahrzeugen, die auf wenigstens zwei Fahrbahnen fahren können, mit einem Radargerät (1), einem Modul (2) für die Verarbeitung des Empfangssignals des Radargeräts, das einen Abtastcodierer (20), Mittel (21) zur Berechnung der Fourier-Transformierten und Erfassungsmittel (23) aufweist, und mit einem Modul (3) zur Gewinnung des Parameters, das ausgehend von den Ausgangssignalen der Erfassungsmittel (23) und der Mittel (21) zur Berechnung der Fourier-Transformierten arbeitet, dadurch gekennzeichnet, daß das Radargerät (1) ein Impulsradargerät ist, mit einem Sender (11) zur Aussendung von Impulsen einer gegebenen Trägerfrequenz $f_0$ und einer Dauer $\tau$, einem Empfänger (15), der außerhalb der Sendeperioden der Impulse arbeitet, und mit einem Strahlungsdiagramm, das dem Seitenwinkel nach schmal und dem Höhenwinkel nach ausreichend groß ist, um die Fahrbahnen zu überdecken und eine gleichzeitige Kontrolle der Fahrbahnen zu ermöglichen, und das um einen Höhenwinkel $\alpha_s$ und um einen Seitenwinkel ag geneigt ist, wobei die Werte der Impulsdauer $\tau$, des Höhenwinkels $\alpha_s$ und des Seitenwinkels ag so gewählt sind, daß wenigstens ein Entfernungsfenster des Radargeräts in einer Fahrbahn enthalten ist und daß die Mittel zur Berechnung der Fourier-Transformierten mit einer ganzen Zahl N von zeitlichen Abtastwerten arbeiten, die vom Abtastcodierer für jedes Entfernungsfenster entsprechend jeder Fahrbahn abgegeben werden, und daß das Modul (2) für die Verarbeitung des Empfangssignals des Radargeräts mit einem Glättungsfilter (22) für die Amplitude der von den Berechnungsmitteln abgegebenen Frequenzabtastwerte ausgestattet ist, das zwischen die Mittel (21) zur Berechnung der Fourier-Transformierten und die Erfassungsmittel (23) eingefügt ist, die Mittel zum Vergleich der Amplitude der vom Glättungsfilter abgegebenen Abtastwerte mit einem gegebenen Schwellenwert sind, um die Fahrzeugdurchfahrt auf jeder Fahrbahn zu erfassen.

**2.** Rechensystem nach Anspruch 1, dadurch gekennzeichnet, daß das Strahlungsdiagramm (6) dem Höhenwinkel nach einen Gewinn $G(\theta)$ aufweist, der sich in Abhängigkeit von dem Höhenwinkel ($\theta$) nach dem Kosekansquadrat

gemäß der folgenden Beziehung ändert:

$$G(\theta) = G_0 \, \frac{CSC^2\theta}{CSC^2\theta_0} \qquad \text{für} \qquad \theta \in [\theta_0, \theta_{max}]$$

wobei:

- $G_0$ der im wesentliche konstante Gewinn des Strahlungsdiagramms für Höhenwinkel $\theta$ ist, die kleiner als $\theta_0$ sind;
- $\theta_0$ und $\theta_{max}$ zwei vorbestimmte Höhenwinkelwerte sind.

3. Rechensystem nach einem der vorhergehenden Ansprüche, dadurch gekennzeichnet, daß der Parameter die Anzahl n von Fahrzeugen ist, die auf jeder Fahrbahn fahren, und daß das Gewinnungsmodul (3) Inkrementierungsmittel (30) enthält, die jeweils bei der Erfassung eines Fahrzeugs um eine Einheit zunehmen.

4. Rechensystem nach einem der Ansprüche 1 bis 3, dadurch gekennzeichnet, daß der Parameter die Geschwindigkeit V eines in einem Geschwindigkeitsbereich $D_v$ erfaßten Fahrzeugs ist und daß das Gewinnungsmodul (3) erste Mittel (31) zur Berechnung dieser Geschwindigkeit enthält, welche die Ordnung f des von Null verschiedenen Frequenzabtastwerts suchen, der der maximalen Amplitude der vom Filter (22) abgegebenen Abtastwerte entspricht, und die Geschwindigkeit V des Fahrzeugs durch Anwendung der folgenden Beziehungen berechnen:

$$\begin{cases} V(km \, / \, h) = (f - N) \dfrac{F_R \; x \; c \; x \; \alpha_v}{2 \; f_0 \; N \cos \alpha_g \; \cos \alpha_s} & \text{wenn } f > \dfrac{N}{2} \\[3em] V(km \, / \, h) = f \quad \dfrac{F_R \; x \; c \; x \; \alpha_v}{2 \; f_0 \; N \cos \alpha_g \; \cos \alpha_s} & \text{wenn } f \leq \dfrac{N}{2} \end{cases}$$

worin:

$F_R$ die Folgefrequenz des Radargeräts ist,
c die Lichtgeschwindigkeit ist
und
$\alpha_v$ der Umrechnungsfaktor von m/s in km/h ist, der gleich 3,6 ist.

5. Rechensystem nach Anspruch 4, dadurch gekennzeichnet, daß es außerdem die Länge Lv eines erfaßten Fahrzeugs berechnet und daß das Gewinnungsmodul (3) zweite Mittel (32) enthält, welche diese Länge durch Anwendung der folgenden Beziehung berechnen:

$$L_v = V \; x \; D - \frac{L_{cd} \cos \alpha_g}{\cos \alpha}$$

in der D die Dauer der Anwesenheit des Fahrzeugs in dem Strahlungsdiagramm ist, $\alpha$ der Höhenwinkel des Fahrzeugs ist und $L_{cd}$ die Länge eines Entfernungsfensters ist.

6. Rechensystem nach einem der Ansprüche 4 oder 5, dadurch gekennzeichnet, daß es außerdem die mittlere Geschwindigkeit $V_{moy}$ und die harmonische Geschwindigkeit $V_{harm}$ aller Fahrzeuge berechnet, die in einer Gesamtmeßdauer $T_{TOT}$ erfaßt werden, und daß das Gewinnungsmodul (3) dritte Mittel (33) enthält, welche diese Geschwindigkeit durch Anwendung der folgenden Beziehungen berechnen:

$$\begin{cases} V_{moy} = \dfrac{1}{n_v} \displaystyle\sum_{i=1}^{n_v} V_i \\[6mm] \dfrac{1}{V_{harm}} = \dfrac{1}{n_v} \displaystyle\sum_{i=1}^{n_v} \dfrac{1}{V_i} \end{cases}$$

wobei

$n_v$   die Anzahl der in der Gesamtdauer erfaßten Fahrzeuge ist,
$V_i$   die Geschwindigkeit eines erfaßten Fahrzeugs ist.

**7.** Rechensystem nach einem der vorhergehenden Ansprüche, dadurch gekennzeichnet, daß das Glättungsfilter (22) ein Filter vom Tiefpaßtyp ist, das die Amplitude jedes von den Mitteln (21) zur Berechnung der Fourier-Transformierten abgegebenen Abtastwerts durch den Mittelwert aus dieser Amplitude und denjenigen einer geraden Anzahl von zu beiden Seiten dieses Abtastwerts entnommenen Abtastwerten ersetzt.

**8.** Rechensystem nach einem der vorhergehenden Ansprüche, dadurch gekennzeichnet, daß die Module für die Verarbeitung (2) und für die Gewinnung (3) mit Hilfe von Speichermitteln (24) zeitversetzt arbeiten.

**9.** Rechensystem nach einem der vorhergehenden Ansprüche, dadurch gekennzeichnet, daß die Höhe h größer als die maximale Höhe ist, die ein Fahrzeug haben kann.

## Claims

**1.** System for travelling calculating at least one parameter for checking vehicular traffic travelling on at least two traffic lanes including a radar (1), a module for processing the reception signal from the radar (2) provided with a sampler/coder (20), with Fourier transform calculation means (21) and with detection means (23), and a module (3) for extracting the said parameter operating on the basis of the output signals of the detection means (23) and the Fourier transform calculation means (21), characterized in that the said radar (1) is a pulse radar with a transmitter (11) transmitting pulses of given carrier frequency $f_0$ and of duration $\tau$, with a receiver (15) operating outside the pulse transmission periods and with a radiation diagram which is narrow in terms of bearing, sufficiently wide in terms of elevation as to cover the said lanes and allow simultaneous checking of the said lanes, and inclined by an angle of elevation $\alpha_s$ and by an angle of bearing $\alpha_g$, the values of the pulse duration $\tau$, of the angle of elevation $\alpha_s$ and of the angle of bearing $\alpha_g$ being chosen such that at least one range bin of the radar is included within a lane, and in that the said Fourier transform calculation means operate on an integer Number N of time samples output by the sampler/coder for each range bin corresponding to each traffic lane and that the said module for processing the reception signal from the radar (2) is provided with a filter (22) for smoothing the amplitude of the frequency samples output by the calculation means and which is interposed between the Fourier transform calculation means (21) and the detection means (23) which are means for comparing the amplitude of the samples output by the smoothing filter with a given threshold so as to detect the passage of a vehicle over each lane.

**2.** Calculation system according to Claim 1, characterized in that the radiation diagram (6) has an elevation gain G ($\theta$) that is a function of the elevation angle $\theta$ and varies with the square of the cosecant according to the following relation:

$$G(\theta) = G_0 \, \frac{CSC^2 \theta}{CSC^2 \theta_0} \qquad for \qquad \theta \in [\theta_0, \theta_{max}]$$

where:

- $G_0$ = the practically constant gain of the radiation diagram for elevation angles $\theta$ less than $\theta_0$

- $\theta_0$ and $\theta_{max}$ are two predetermined elevation angles.

3. Calculation system according to any one of the preceding claims, characterized in that the said parameter is the number n of vehicles travelling in each lane, and in that the extraction module (3) contains incrementation means (30) increasing by one unit each time that a vehicle is detected.

4. Calculation system according to any one of Claims 1 to 3, characterized in that the said parameter is the speed V of a vehicle detected within a speed range $D_v$, and in that the extraction module (3) contains first means (31) for calculating this speed searching for the order f of the non-zero frequency sample corresponding to the maximum amplitude of the samples output by the filter (22), and calculating the vehicle speed V by application of the following relations:

$$V(Km/h) = (f\text{-}N)\, \frac{F_R \times c \times \alpha_v}{2f_0 N \cos\alpha_g \cos\alpha_s} \qquad \text{if } f > \frac{N}{2}$$

$$V(Km/h) = f\, \frac{F_R \times c \times \alpha_v}{2f_0 N \cos\alpha_g \cos\alpha_s} \qquad \text{if } f \leq \frac{N}{2}$$

where

$F_R$ = radar recurrence frequency
c = the speed of light =
and
$\alpha_v$ is the conversion factor from m/s to km/h, equal to 3.6.

5. Calculation system according to Claim 4, characterized in that it also calculates the length $L_v$ of a detected vehicle, and in that the extraction module (3) contains second means (32) for calculating this length by application of the following relation:

$$L_v = V \times D - \frac{L_{cd}\, \cos\alpha_g}{\cos\alpha}$$

where D is the time during which the vehicle is present in the radiation diagram, and $\alpha$ is the elevation angle of the vehicle, and $L_{cd}$ is the length of a range bin.

6. Calculation system according to any one of Claims 4 or 5, characterized in that it also calculates the average speed $V_{ave}$ and the harmonic speed $V_{harm}$ of all vehicles detected during a total measurement period $T_{TOT}$, and characterized in that the extraction module (3) contains third means (33) for calculating these speeds by application of the following relations:

$$V_{ave} = \frac{1}{n_v} \sum_{i=1}^{n_v} V_i$$

$$V_{harm} = \frac{1}{n_v} \sum_{i=1}^{n_v} \frac{1}{V_i}$$

where

$n_v$ = the number of vehicles detected during the total period
$V_i$ = the speed of a detected vehicle.

7.  Calculation system according to any one of the preceding claims, characterized in that the smoothing filter (22) is a low-pass type filter replacing the amplitude of each sample output by the means (21) for calculating the Fourier transform, by the average of the said amplitude with those of an even number of samples taken on either side of the said sample.

8.  Calculation system according to any one of the preceding claims, characterized in that the processing module (2) and extraction module (3) run off-line by virtue of storage means (24).

9.  Calculation system according to any one of the preceding claims, characterized in that the height h is greater than the maximum possible height of a vehicle.

FIG.1

FIG.2a

FIG.2b

13

FIG.3

FIG.4

14

FIG.5a

FIG.5b

FIG. 6

EP 0 588 687 B1